Europäisches Patentamt

European Patent Office

Office européen des brevets

(11) Numéro de publication: **0 016 699**
**A1**

## (12) DEMANDE DE BREVET EUROPEEN

(21) Numéro de dépôt: **80400350.7**

(22) Date de dépôt: **17.03.80**

(51) Int. Cl.³: **H 05 B 6/78**
**B 29 F 3/08**

(30) Priorité: **16.03.79 FR 7906688**

(43) Date de publication de la demande:
**01.10.80 Bulletin 80/20**

(84) Etats Contractants Désignés:
**AT BE CH DE GB IT LU NL SE**

(71) Demandeur: **Société Anonyme dite: TECHNICS LAMBDA INTERNATIONAL**
**25, boulevard du Lac**
**F-95880 Enghien les Bains(FR)**

(72) Inventeur: **Beck, Michel**
**25, boulevard du Lac**
**F-95880 Enghien Les Bains(FR)**

(74) Mandataire: **Brot, Philippe et al,**
**CABINET BROT 83, rue d'Amsterdam**
**F-75008 Paris(FR)**

(54) **Dispositif pour le traitement thermique ou thermochimique, en continu, d'objets, par émission de micro-ondes.**

(57) Dispositif comportant un applicateur (1) dans lequel sont générées les micro-ondes. A l'intérieur de cet applicateur est disposée une enceinte tubulaire (10), de préférence coaxiale réalisée en un matériau inerte aux micro-ondes qui est raccordée à des moyens (18) permettant de générer une atmosphère de vide relatif ou de gaz de traitement. Cette enceinte est étanche et comprend des moyens permettant l'accès et la sortie des objets à traiter tout en assurant la continuité de l'étanchéité.

L'invention s'applique notamment à la vulcanisation ou à la réticulation de profilés ou de tuyaux.

EP 0 016 699 A1

./...

- 1 -

**Dispositif pour le traitement thermique ou thermochimique, en continu, d'objets, par émission de micro-ondes.**

La présente invention concerne un dispositif pour le traitement thermique ou thermochimique, en continu, d'objets par émission de micro-ondes.

Elle s'applique plus particulièrement, mais non exclusivement, à la vulcanisation ou à la réticulation en continu de profilés ou de tuyaux en une ou plusieurs matières vulcanisables ou réticulables, notamment à la sortie d'une extrudeuse.

Habituellement, pour réaliser un tel traitement en utilisant les micro-ondes, on fait défiler le profilé qui sort d'une extrudeuse dans un appareil généralement appelé applicateur, à l'intérieur duquel sont générées des ondes électromagnétiques créées par un magnétron. Un tel applicateur consiste en une enceinte métallique, non magnétique, aux dimensions calculées en fonction de la fréquence et de la densité d'énergie nécessaire pour un produit donné et l'échauffement que l'on désire obtenir.

En général, on utilise couramment, en tant qu'applicateur, des guides d'ondes circulaires ou même rectangulaires qui permettent d'obtenir une forte densité d'énergie et une production horaire élevée.

Par ailleurs, on sait que de nombreux traitements thermiques ou thermochimiques tels que, par exemple, la réticulation de profilés en caoutchouc ou en matière thermoplastique, telle que du polyéthylène, doivent s'effectuer dans une atmosphère de gaz neutre sous pression (azote, gaz carbonique etc..) ou même, pour d'autres applications, sous un vide relatif.

A cet effet on réalise donc des applicateurs rigoureusement étanches et dont les orifices d'accès et de sortie sont équipés de dispositif assurant la continuité de l'étanchéité au passage du profilé.

On obtient donc des applicateurs dont la totalité du volume interne est soumise à l'atmosphère de gaz neutre sous pression ou de vide relatif, caractéristique qui présente un certain nombre d'inconvénients :

Le volume à maintenir sous pression ou sous vide, à une température sensiblement égale à la température de traitement, est relativement important, ce qui implique des installations coûteuses et une dépense d'énergie disproportionnée par rapport à la seule énergie qui est nécessaire pour effectuer le traitement.

Il se produit une déperdition importante de chaleur, notamment sur les parois de l'applicateur qui, comme précédemment mentionné, sont réalisées en un métal généralement bon conducteur, ainsi qu'un réchauffement nuisible du générateur d'ondes électromagnétiques.

En outre, du fait de la surpression à l'intérieur de l'applicateur, les poussières, les fumées ou les autres impuretés, peuvent venir se déposer à l'intérieur du générateur de micro-ondes et constituer ainsi des charges parasites.

L'invention a donc pour but de supprimer ces inconvénient:

Elle propose donc a cet effet de disposer, à l'intérieur d'un applicateur du type de ceux précédemment décrits, une

0016699

- 3 -

enceinte tubulaire, de préférence coaxiale, réalisée en un matériau inerte aux micro-ondes, par exemple en quartz ou en téflon chargé de verre, à l'intérieur de laquelle on réalise la susdite atmosphère de gaz de traitement sous pression ou bien de vide relatif, cette enceinte étant étanche et comprenant des moyens permettant l'accès et la sortie des objets à traiter tout en assurant la continuité de l'étanchéité.

Selon une autre caractéristique de l'invention, dans le cas de la vulcanisation ou de la réticulation en continu d'objets tels que des profilés ou des tuyaux en au moins une matière vulcanisable ou réticulable, à la sortie d'une extrudeuse, l'orifice d'accès de la susdite enceinte tubulaire peut venir se fixer avec étanchéité à la tête de l'extrudeuse tandis que son extrémité de sortie est munie d'un système réalisant une étanchéité entre ledit tube et lesdits objets, ce système d'étanchéité pouvant consister en un joint à fuite du type de ceux utilisés couramment en cablerie, et qui, par contre pression, établit un équilibre de la pression entre l'intérieur de l'enceinte et la pression extérieure en aval du joint.

D'une façon analogue cette étanchéité pourrait également être obtenue au moyen d'une filière montée sur l'orifice de sortie de l'enceinte et destinée à parfaire ou même à modifier la section du profilé. Dans ce cas, l'étanchéité est obtenue grâce à la pression exercée par le profilé sur les parois internes de la filière.

L'orifice de sortie de l'enceinte peut également être reliée de façon étanche à l'orifice d'entrée d'un appareillage effectuant une opération consécutive au traitement proprement dit, telle qu'une opération de maintien en température ou même d'enroulement du profilé sur un mandrin. Dans ce cas l'atmosphère dans laquelle s'effectuent ces opérations doit être de préférence la même que celle qui règne à l'intérieur de l'applicateur.

- 4 -

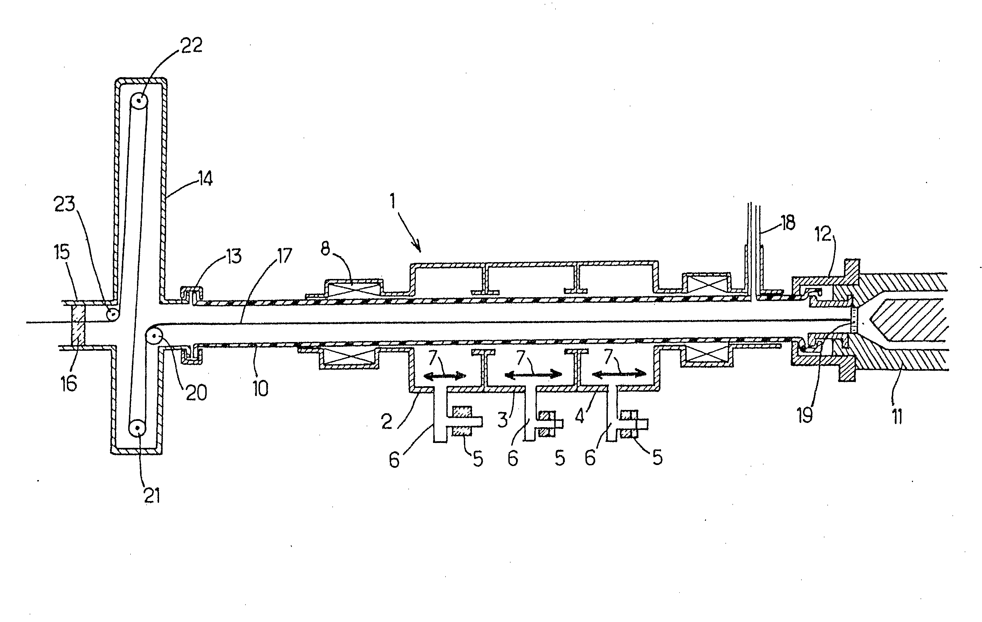

Un mode de réalisation de l'invention sera décrit ci-après à titre d'exemple non limitatif, avec référence au dessin annexé dans lequel :

La figure unique est une coupe axiale d'un dispositif pour la réticulation d'un profilé ou d'un tuyau réalisé en au moins une matière réticulable.

Dans ce dispositif, l'applicateur 1 se compose de trois cavités résonnantes cylindriques modulaires 2, 3 et 4 assemblées les unes aux autres. Dans chacune de ces cavités 2, 3 et 4 les micro-ondes sont générées au moyen d'un ensemble comprenant un magnétron 5, un guide d'adaptation 6 et une antenne rayonnante 7 disposée dans la cavité. Cet applicateur 1 peut en outre comprendre, comme représenté, à au moins l'un de ces orifices, des charges absorbantes 8 destinées à éviter la propagation des micro-ondes en dehors de l'applicateur.

L'applicateur 1 est traversé par un tube circulaire coaxial 10 en une matière inerte aux micro-ondes telle que par exemple du quartz ou du téflon chargé de verre.

Ce tube 10 est raccordé de façon étanche d'une part, par l'une de ses extrémités, à la tête de sortie d'une extrudeuse 11, au moyen d'un système de verrouillage mécanique classique 12, et, d'autre part, à son autre extrémité, par un raccordement étanche classique 13, à l'orifice d'entrée d'un poste de maintien en température 14 dont l'orifice de sortie 15 est muni d'un dispositif 16 permettant d'obtenir une étanchéité dynamique entre sa propre paroi et ledit profilé 17.

Par ailleurs, le tube circulaire 10 est relié (conduit 18) à une source de gaz sous pression pouvant éventuellement être préchauffé à une température sensiblement égale à la température de traitement.

Dans un tel système le profilé 17 formé par la filière 19, dont est munie la tête de l'extrudeuse 11, circule de façon continue dans le tube circulaire 10 puis ensuite, grâce à un système à poulies de renvoi 20, 21, 22 et 23, dans le poste de maintien en température 14 d'où il sort, en fin de parcours par l'orifice de sortie 15, au travers du dispositif d'étanchéité dynamique 16.

Au cours de son passage dans la région du tube circulaire 10, située au droit des cavités résonnantes 2, 3 et 4, le profilé 17 est soumis à l'action des micro-ondes et subit un échauffement à coeur jusqu'à ce qu'il atteigne la température de traitement. Le profilé se maintient ensuite à cette température jusqu'à sa sortie du poste de maintien en température, une fois la vulcanisation ou la réticulation terminée.

Revendications de brevet

1.- Dispositif pour le traitement thermique ou thermochimique en continu, d'objets, par émission de micro-ondes, comportant un applicateur à l'intérieur duquel sont générées les micro-ondes,
caractérisé en ce qu'il comprend à l'intérieur dudit applicateur une enceinte tubulaire, de préférence coaxiale, réalisée en un matériau inerte aux micro-ondes, à l'intérieur de laquelle on fait défiler les objets à traiter et raccordée à des moyens permettant de générer une atmosphère de vide relatif ou de gaz de traitement, cette enceinte étant étanche et comprenant des moyens permettant l'accès et la sortie des objets à traiter tout en assurant la continuité de l'étanchéité.

2.- Dispositif selon la revendication 1,
caractérisé en ce que le susdit applicateur comprend au moins une cavité résonnante.

3.- Dispositif pour la vulcanisation ou la réticulation en continu d'objets tels que des profilés ou des tuyaux en au moins une matière vulcanisable ou réticulable, à la sortie d'une extrudeuse, selon l'une des revendications précédentes,
caractérisé en ce que l'orifice d'accès de la susdite enceinte comprend des moyens lui permettant de venir se fixer, avec étanchéité, sur la tête de l'extrudeuse, tandis que son extrémité de sortie est munie d'un système réalisant une étanchéité entre ledit tube et lesdits objets.

4.- Dispositif selon la revendication 3,
caractérisé en ce que le susdit système consiste en un joint à fuite qui, par contre-pression, établit un équilibre de pression entre l'intérieur de l'enceinte et la pression extérieure en aval du joint.

5.- Dispositif selon la revendication 3,
caractérisé en ce que le susdit système d'étanchéité consiste en une filière montée sur l'orifice de sortie de l'enceinte et destinée à parfaire ou même à modifier la section du profilé.

6.- Dispositif selon l'une des revendications 1 et 2, caractérisé en ce que la susdite enceinte est reliée de façon étanche à l'orifice d'entrée d'un appareillage effectuant une opération consécutive audit traitement, telle qu'une opération de maintien en température.

7.- Dispositif selon l'une des revendications précédentes, caractérisé en ce que le susdit applicateur comprend, à au moins l'un de ses orifices, des charges absorbantes destinées à éviter la propagation des micro-ondes en dehors de l'applicateur.

1/1

0016699

Office européen
des brevets

**RAPPORT DE RECHERCHE EUROPEENNE**

Numéro de la demande

EP 80 40 0350

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| | <u>DE - A - 2 737 182</u> (TROESTER MA-SCHINENBAU)<br><br>* Page 4, 1er alinéa; page 9, dernier alinéa; page 10, alinéas 1,2; figures 1,2 * | 1-4 | H 05 B 6/78<br>B 29 F 3/08 |
| | -- | | |
| | <u>GB - A - 560 755</u> (MARCONI'S W.T.C.)<br><br>* Page 2, lignes 103-125; page 3, lignes 5-13; figure 2 * | 1-4 | |
| | -- | | |
| | <u>GB - A - 1 092 861</u> (CRAWFORD)<br><br>* Page 1, lignes 46-64; figure 2 * | 1,2 | DOMAINES TECHNIQUES RECHERCHES (Int. Cl. ³)<br><br>H 05 B 6/78<br>6/80<br>6/64<br>B 29 F 3/08<br>B 29 H 5/24<br>5/26<br>5/28 |
| | -- | | |
| | <u>FR - A - 2 362 551</u> (SAINT-GOBAIN)<br><br>* Page 1, lignes 1-4; page 5, lignes 1-5; figure 3 * | 1,2,5,6 | |
| | -- | | |
| | <u>FR - A - 2 245 145</u> (BAUMGARTNER PAPIERS)<br><br>* Page 1, lignes 25-32; page 2, lignes 16-23; figure 1 * | 1,2,7 | |
| | -- | | CATEGORIE DES DOCUMENTS CITES |
| A | <u>FR - A - 2 369 664</u> (TREFIMETAUX)<br><br>* Page 2, lignes 3-8; figure unique * | 1 | X: particulièrement pertinent<br>A: arrière-plan technologique<br>O: divulgation non-écrite<br>P: document intercalaire<br>T: théorie ou principe à la base de l'invention |
| | -- | | E: demande faisant interference<br>D: document cité dans la demande |
| A | <u>FR - A - 1 428 286</u> (ELLIOTT EL. TUBES)<br><br>* Page 1, colonne de gauche, alinéa 4; figure 1 * | 1 | L: document cité pour d'autres raisons |
| | --     ./. | | &: membre de la même famille, document correspondant |

| X | Le présent rapport de recherche a été établi pour toutes les revendications | | |
|---|---|---|---|
| Lieu de la recherche<br>**La Haye** | Date d'achevement de la recherche<br>**10-06-1980** | | Examinateur<br>**RAUSCH** |

OEB Form 1503.1   06.78

**Office européen des brevets**

**RAPPORT DE RECHERCHE EUROPEENNE**

Numéro de la demande

EP 80 40 0350

-2-

| Catégorie | Citation du document avec indication, en cas de besoin, des parties pertinentes | Revendica-tion concernée | CLASSEMENT DE LA DEMANDE (Int. Cl. ³) |
|---|---|---|---|
| **DOCUMENTS CONSIDERES COMME PERTINENTS** | | | |
| A | US - A - 2 770 841 (COOKE et al.)<br>* Colonne 1, 2e alinéa; figure unique * <br><br>---- | 1 | |
| | | | **DOMAINES TECHNIQUES RECHERCHES (Int. Cl. ³)** |

OEB Form 1503.2   06.78